# FASCICULE DE BREVET EUROPEEN

(11) **EP 2 176 491 B1**
(45) Date de publication et mention de la délivrance du brevet: **11.05.2011**
(21) Numéro de dépôt: 08827564.9
(22) Date de dépôt: 05.08.2008
(51) Int. Cl.: E06B 9/68, H02J 7/32

(54) **Récuperation de l'énergie potentielle du tablier d'un volet roulant**
Rückgewinnung der potentiellen Energie aus dem Panzer eines Rollladens
Recovery of potential energy from the apron of a roller blind

(30) Priorité: 09.08.2007 FR 0757007
(43) Date de publication de la demande: 21.04.2010
(73) Titulaire: BUBENDORFF Société Anonyme, 68220 Attenschwiller (FR); Commissariat à l'Energie Atomique (Etablissement Public), 75015 Paris (FR)
(72) Inventeur: LABRUNIE, Antoine, F-75005 Paris (FR)
(74) Mandataire: Rhein, Alain
(86) Numéro de dépôt international: PCT/FR2008/051461
(87) Numéro de publication internationale: WO 2009/022079

(56) Documents cités:
- DE-A1- 3 933 266
- DE-U1- 20 106 777

## Description

La présente invention entre dans le domaine des volets roulants, notamment de volet roulant alimenté de manière autonome.

Un tel volet roulant comprend un tablier composé de lames articulées dont les extrémités latérales coulissent intérieurement le long de glissières latérales lorsque le tablier passe d'une position déployée à une position d'enroulement autour d'un arbre, et inversement, sous l'action de moyens de motorisation. Le document DE 201 06 777 U décrit un tel volet.

Dans le cadre de la présente invention, ladite motorisation est alimentée électriquement de manière autonome par l'intermédiaire de batteries. De plus, ces dernières peuvent être prévues rechargeables sous forme d'accumulateurs. Leur rechargement peut notamment être effectué au travers d'un capteur de conversion d'une énergie renouvelable, tel un capteur photovoltaïque convertissant l'énergie solaire, une éolienne ou autre.

Les principales difficultés d'un dispositif alimenté de manière autonome résident dans l'optimisation de sa durée de fonctionnement tout en conservant une fiabilité élevée. Dans le cadre d'un volet roulant selon l'invention, l'autonomie doit être aussi importante que possible afin que l'utilisateur puisse actionner ledit volet quand il le désire, quelles que soient les conditions météorologiques. Pour autant, l'amélioration de l'autonomie, par exemple au travers d'une économie d'énergie, ne doit pas s'effectuer au détriment du fonctionnement dudit volet. En effet, son utilisation impose un temps raisonnable de déplacement du tablier du volet et, par conséquent, une vitesse de déploiement et de repliement adaptée.

C'est dans ce cadre spécifique de l'invention qu'il a été imaginé de récupérer l'énergie potentielle de pesanteur du tablier lors de son coulissement de la position enroulée vers la position déployée. La conversion de cette énergie permet le rechargement des batteries et améliore considérablement l'autonomie du volet roulant.

Au cours de ce déploiement de tablier de volet roulant, on rencontre plusieurs phases, une première imposant l'entraînement du volet roulant pour repousser les premières lames du tablier dans les coulisses latérales de guidage. Cette première phase est suivie d'une seconde où le poids du tablier, déjà engagé dans les coulisses, devient suffisant pour assurer l'entraînement et donc le déploiement du volet roulant, durant cette seconde phase, le moteur agit davantage en tant que moyen de freinage de manière à limiter la vitesse de descente du tablier et éviter les risques d'accident ainsi que le choc lorsque le tablier arrive en butée en extrémité basse desdites glissières. A cet instant suit une troisième phase où la traction exercée par le tablier sur l'arbre d'enroulement tend progressivement à diminuer, correspondant à l'empilement des lames dudit tablier les unes sur les autres.

On notera à ce propos que lesdites lames sont souvent mobiles entre elles suivant une direction perpendiculaire à leur axe longitudinal pour conférer au volet roulant, selon le cas, une position ajourée ou d'occultation totale. En effet, dans une position écartée les unes des autres, ces lames laissent apparaître des jours favorisant le passage de la lumière et assurant une certaine aération.

Durant cette troisième phase le moteur peut progressivement passer d'une fonction de freinage à une nouvelle fois une fonction d'entraînement en fonction du ratio entre le poids suspendu du tablier et les frottements subis par celui-ci.

La récupération d'énergie peut intervenir lorsque le moteur assure une fonction de freinage. Cependant on comprend aisément que la traction exercée par le tablier varie constamment. Il en va de même de la puissance de freinage. En conséquence, la puissance récupérable est elle-même très variable.

On a constaté que cette puissance, si elle est supérieure à un certain seuil, peut être destructrice de l'accumulateur lui-même ou des composants électroniques et électriques assurant son rechargement.

On a constaté par ailleurs que ce seuil de puissance destructrice était dépendant de paramètres climatiques, plus particulièrement de la température extérieure et celle de l'environnement des composants. En particulier, certains types de batteries ou composants électriques et électroniques soumis à des températures, selon le cas basses ou élevées, voient leurs conditions de fonctionnement modifiées. Par exemple, une batterie au lithium rechargée à des températures basses peut être détériorée lors d'un apport d'énergie de rechargement qui soit trop élevé ou trop brutal. De même, certains composants électroniques et électriques soumis à des températures élevées, par échauffement en raison d'un courant trop fort, sont amenés à être détériorés.

Avantageusement, on gère la puissance récupérée en tenant compte des différents composants du volet roulant tout en assurant un fonctionnement optimisé de ce dernier.

Pour ce faire, la présente invention porte sur un procédé de récupération de l'énergie potentielle d'un tablier d'un volet roulant comportant des moyens d'entraînement pourvus d'un moteur raccordé à des moyens d'alimentation autonome en phase de déploiement ou de repliement dudit tablier.

Un tel procédé se caractérise par le fait que durant la phase de déploiement ou de repliement du tablier on détermine une phase de récupération d'énergie correspondant à un couple moteur exercé par le tablier sur lesdits moyens d'entraînement.

Selon d'autres caractéristiques, durant cette phase de récupération d'énergie, on commande le fonctionnement du moteur en tant que génératrice ; on détermine une valeur seuil de puissance récupérable en fonction d'au moins un paramètre relatif aux conditions de fonctionnement des moyens d'alimentation autonome ; on mesure le niveau de puissance délivrée par le moteur fonctionnant en génératrice et on le compare par rapport à ladite valeur seuil ; on ajuste la vitesse de déploiement ou de repliement du tablier pour maintenir le niveau de puissance délivrée inférieur ou égal à ladite valeur seuil.

De plus, durant la phase de récupération d'énergie, on contrôle périodiquement au moins un desdits paramètres et on détermine une nouvelle valeur seuil pour ajuster de manière périodique la vitesse de déploiement ou de repliement du tablier en fonction de cette nouvelle valeur.

L'invention a aussi pour objet le dispositif de mise en oeuvre d'un tel procédé.

D'autres caractéristiques et avantages de l'invention ressortiront de la description détaillée qui va suivre des modes de réalisation non limitatifs de l'invention.

La présente invention concerne l'amélioration de l'autonomie de volet roulant alimenté de manière autonome.

Un tel volet roulant comprend des moyens d'entraînement pourvus d'un moteur raccordé à des moyens d'alimentation autonome. Ces derniers comprennent en outre une batterie. De préférence, cette batterie est prévue rechargeable, sous la forme d'un accumulateur, tel qu'une batterie au lithium ou autre. De plus, des moyens sont connectés à ladite batterie de manière à la recharger électriquement, préférentiellement par captation d'une énergie de type renouvelable, comme l'énergie solaire ou le vent, puis par conversion de l'énergie en courant électrique.

A ce titre, de tels moyens de conversion et de rechargement sont aptes à recharger la batterie en fonction de son niveau de charge. Des moyens peuvent être prévus pour mesurer ce niveau de charge. Il peut s'agir par exemple de capteurs pour mesurer la tension aux bornes de ladite batterie afin d'autoriser son rechargement ou non. Une limite de charge est préalablement déterminée en fonction des caractéristiques de la batterie et correspond dans notre exemple à un seuil de tension évitant toute détérioration de ces éléments de stockage de l'énergie électrique.

Ainsi le volet comprend au moins un capteur, sous forme d'un capteur photovoltaïque, d'une éolienne ou analogue. De plus, l'invention comprend des moyens de conversion de l'énergie ainsi captée, et reliés à ladite batterie pour autoriser son rechargement.

Les moyens d'alimentation autonome alimentent des moyens aptes à entraîner un tablier d'une position enroulée autour d'un arbre à une position déployée, et inversement. Pour ce faire, le tablier coulisse le long de glissières latérales, généralement disposées sur les tableaux de l'ébrasement d'une porte ou fenêtre à obturer au moyen dudit tablier.

Un avantage de la présente invention consiste à convertir l'énergie potentielle du déploiement du tablier en énergie électrique de rechargement desdites batteries.

Pour ce faire, l'invention a pour objet la récupération de l'énergie potentielle de pesanteur du tablier en phase de déploiement ou de repliement de ce dernier.

Plus particulièrement, mais non limitativement, l'invention concerne un volet roulant à déploiement vertical et elle vise à récupérer l'énergie potentielle développée par le poids croissant du tablier au fur et à mesure de sa descente, lors du passage de la position enroulée à la position déployée, ou inversement.

En somme, l'énergie mécanique engendrée par le poids descendant du tablier est récupérée partiellement pour être convertie en énergie électrique puis stockées au sein de ladite batterie sous forme d'énergie électrochimique. Cette énergie peut ensuite être réutilisée pour la levée du tablier ou initialiser une future descente.

Comme évoqué précédemment, durant la phase de déploiement ou de repliement du tablier, est déterminée une phase de récupération d'énergie correspondant à un couple moteur exercé par le tablier sur lesdits moyens d'entraînement.

Pendant cette phase de récupération d'énergie, le poids du tablier se suffit à lui-même pour s'entraîner et il n'est plus nécessaire de fournir d'énergie au travers des moyens d'entraînement. C'est pourquoi il a été imaginé d'équiper les moyens d'alimentation autonome de moyens électroniques de conversion de puissance réversibles. En d'autres termes, la batterie peut alimenter les moyens d'entraînement, mais ces derniers, comme le moteur, peuvent aussi fonctionner en tant que génératrice et ainsi alimenter la batterie en vue de son rechargement.

De manière générale, la puissance récupérée varie continuellement en fonction du poids suspendu du tablier au fur et à mesure de sa descente. Par ailleurs, les frottements, notamment les frottements visqueux, sont fonction de la vitesse de descente du tablier du volet. Par conséquent, la vitesse de descente de ce dernier influe sur l'énergie convertible. Il convient donc de commander la variation de vitesse de descente du tablier afin de récupérer une quantité optimale d'énergie.

Pour autant, la puissance récupérée ne doit pas nuire au fonctionnement du volet roulant, ni détériorer ses composants. En effet, si l'énergie reste relativement faible, la puissance que peut fournir le tablier lors de sa descente est non négligeable en vue de la convertir pour recharger ladite batterie. C'est pourquoi une limitation de la vitesse de descente du tablier est opérée en fonction de paramètres internes et extérieurs au volet roulant.

C'est pourquoi l'invention comprend des moyens de contrôle de la vitesse de déploiement du tablier en fonction des différents facteurs extérieurs et internes audit volet roulant. Une unité de calcul, tel un processeur, interprète ces données en temps réel pour commander les moyens d'entraînement et ainsi influencer sur la vitesse de descente du tablier.

En particulier, la vitesse de déploiement est contrôlée principalement, mais non limitativement par rapport à au moins un paramètre relatif aux conditions de fonctionnement des moyens d'alimentation autonome.

Pour ce faire, une valeur seuil de puissance récupérable est déterminée en fonction d'au moins un paramètre. Plus particulièrement, plusieurs paramètres peuvent être mesurés et mémorisés afin de calculer ladite valeur seuil.

Un paramètre pris en compte correspond à la température ambiante régnant au sein dudit volet roulant. En particulier, la température des composants électriques et électroniques des moyens d'alimentation.

En effet, si la température est très basse ou très élevée, les composants et la batterie peuvent être détériorés sous l'effet d'une variation importante, et parfois rapide, du courant et de la dissipation thermique, limitant d'autant la durée de vie desdits éléments. Par exemple, une batterie au lithium supporte mal les basses températures et les échauffements brutaux. Il convient donc de mesurer la température des composants ainsi que la température ambiante.

Un autre paramètre, à prendre en compte seul ou de manière additionnelle, correspond à la mesure de l'état de charge des moyens d'alimentation autonome. Cet état de charge peut par exemple être mesuré en suivant la tension aux bornes d'une batterie. Comme évoqué précédemment au travers des moyens de rechargement de la batterie, il est nécessaire de contrôler l'état de charge de cette dernière, ainsi que la quantité d'énergie et la puissance qui lui sont délivrées, pour ne pas l'endommager.

Chaque paramètre est mémorisé afin d'être comparé et/ou de servir au calcul de la valeur seuil de récupération de puissance. Une fois cette valeur fixée, on mesure le niveau de puissance délivrée par le moteur fonctionnant en génératrice et on le compare par rapport à ladite valeur seuil. La vitesse de déploiement ou de repliement du tablier est ajustée pour maintenir le niveau de puissance délivrée inférieur ou égal à la valeur seuil.

Plus spécifiquement, durant la phase de récupération d'énergie, on contrôle périodiquement au moins un desdits paramètres et on détermine une nouvelle valeur seuil pour ajuster de manière périodique la vitesse de déploiement ou de repliement du tablier en fonction de cette nouvelle valeur.

Pour ce faire, des moyens sont aptes à mesurer lesdits paramètres et à mémoriser les valeurs mesurées. Il en est de même pour la puissance récupérable. Des capteurs appropriés peuvent être disposés à l'intérieur des composants électriques et électronique, à l'intérieur du volet roulant ainsi qu'à l'extérieur de ce dernier. De façon similaire, sont positionnés des moyens de mesure de l'état de charge de la batterie, par exemple des moyens de mesure de la tension de la batterie.

Les résultats de ces mesures sont ensuite stockés dans une mémoire afin d'y être utilisés par un processeur calculant ladite valeur seuil.

Une fois cette dernière déterminée, des moyens sont aptes à la comparer avec le niveau de puissance. Le croisement de ces données est comparé à des abaques avec graduation et correspondance afin d'optimiser la vitesse de descente du tablier.

Cette optimisation est réalisée en fonction de tableaux de visualisation de la vitesse extrême de descente du tablier en fonction d'une température donnée ou de l'état de charge de la batterie. On obtient ainsi des courbes correspondant au temps entre deux pannes dites « non destructrices ».

En résumé, dans le cas de basse ou haute température, il convient de limiter la vitesse de descente du tablier afin d'éviter toute détérioration des composants électroniques et de la batterie. De plus, au fil de la chauffe des composants, la vitesse de descente peut être amenée à varier afin de s'approcher des valeurs extrêmes pour une durée de vie prolongée tout en maintenant une vitesse de fonctionnement adéquat.

En particulier, la vitesse de descente du tablier du volet roulant varie au sein d'un intervalle. Ainsi, une vitesse maximale de descente du tablier correspond à la borne supérieure dudit intervalle et est déterminée en fonction de la vitesse la plus élevée que la mécanique d'un volet roulant supporte sans qu'elle ne subisse de détérioration. De manière analogue, une vitesse minimale de descente du tablier correspond à la borne inférieure dudit intervalle et est déterminée pour limiter la durée de fermeture afin que le temps de repliement ou de déploiement du tablier reste raisonnable du point de vue d'un utilisateur.

On notera qu'afin d'augmenter l'énergie potentielle convertie, il convient de limiter au maximum les frottements au sein du dispositif selon l'invention, par exemple au niveau des glissières à l'intérieur desquelles coulisse le tablier ainsi qu'au sein du moteur. La somme des forces de frottement exercées sur le tablier doit être nettement inférieure au poids de la partie suspendue de ce dernier. L'énergie récupérée par l'invention est donc d'autant plus importante que les pertes sont minimisées.

De plus, afin de limiter la détérioration des éléments constituant le volet roulant selon l'invention, en particulier les composants électroniques et la batterie, il convient de les protéger, notamment afin de maintenir une température uniforme ou éviter des températures trop basses ou trop élevées.

## Revendications

1. Procédé de récupération de l'énergie potentielle de gravitation du tablier d'un volet roulant comportant des moyens d'entraînement pourvus d'un moteur raccordé à des moyens d'alimentation autonome en phase de déploiement ou de repliement dudit tablier, **caractérisé par le fait que** :
- durant la phase de déploiement ou de repliement du tablier on détermine une phase de récupération d'énergie correspondant à un couple moteur exercé par le tablier sur lesdits moyens d'entraînement.

2. Procédé selon la revendication 1, **caractérisé par le fait que** :
- durant cette phase de récupération d'énergie, on commande le fonctionnement du moteur en tant que génératrice ;
- on détermine une valeur seuil d'énergie récupérable en fonction d'au moins un paramètre relatif aux conditions de fonctionnement des moyens d'alimentation autonome ;
- on mesure le niveau d'énergie délivrée par le moteur fonctionnant en génératrice et on le compare par rapport à ladite valeur seuil ;
- on ajuste la vitesse de déploiement ou de repliement du tablier pour maintenir le niveau d'énergie délivrée inférieur ou égal à ladite valeur seuil.

3. Procédé selon la revendication 2, **caractérisé par le fait que** durant la phase de récupération d'énergie, on contrôle périodiquement au moins un desdits paramètres et on détermine une nouvelle valeur seuil pour ajuster de manière périodique la vitesse de déploiement ou de repliement du tablier en fonction de cette nouvelle valeur.

4. Procédé selon l'une quelconque des revendications 2 à 3, **caractérisé par le fait qu'**au moins un paramètre correspond à la mesure de l'état de charge des moyens d'alimentation autonome, notamment la tension aux bornes d'une batterie.

5. Procédé selon l'une quelconque des revendications 2 à 4, **caractérisé par le fait qu'**au moins un paramètre correspond à la température des composants électriques et électroniques desdits moyens d'alimentation autonome.

6. Procédé selon l'une quelconque des revendications 2 à 5, **caractérisé par le fait qu'**au moins un paramètre correspond à la température ambiante.

7. Volet roulant pour la mise en oeuvre du procédé selon l'une quelconque des revendications précédentes, comprenant des moyens d'entraînement pourvus d'un moteur raccordé à des moyens d'alimentation autonome ainsi que des moyens de récupération de l'énergie correspondant au couple moteur exercé par ledit tablier sur lesdits moyens d'entraînement, **caractérisé par le fait que** lesdits moyens de récupération comprennent :
- des moyens de mesure et de mémorisation, d'une part, d'au moins un paramètre relatif aux conditions de fonctionnement des moyens d'alimentation autonome et, d'autre part, du niveau d'énergie délivrée ;
- des moyens de comparaison dudit niveau d'énergie avec une valeur seuil déterminée en fonction dudit paramètre ; et
- des moyens d'ajustement de la vitesse de déploiement ou repliement dudit tablier.

8. Volet roulant selon la revendication 7, **caractérisé par le fait que** lesdits moyens de mesure comprennent des moyens de mesure de la température des composants électriques et électronique des moyens d'alimentation autonome.

9. Volet roulant selon l'une quelconque des revendications 7 ou 8, **caractérisé par le fait que** lesdits moyens de mesure comprennent des moyens de mesure de l'état de charge des moyens d'alimentation autonome, notamment la tension aux bornes d'une batterie.

10. Volet roulant selon l'une quelconque des revendications 7 à 9, **caractérisé par le fait que** lesdits moyens de mesure comprennent des moyens de mesure de la température ambiante.

## Claims

1. Method for recovering the potential energy of gravity from the apron of a roller blind including driving means provided with a motor connected to autonomous supply means during the unwinding or winding-up phase of said apron, wherein :
- during the unwinding or winding-up phase of the apron is determined a phase of energy recovery corresponding to a motor torque exerted by the apron on said driving means.

2. Method according to claim 1, wherein :
- during this energy recovery phase, the motor is controlled to operate as a generator ;
- a threshold value of recoverable energy is determined depending on at least one parameter related to the operating conditions of the autonomous supply means ;
- the level of the energy delivered by the motor operating as a generator is measured and compared to said threshold value ;
- the unwinding and winding-up speed of the apron is adjusted in order to maintain the level of energy delivered lower than or equal to said threshold value.

3. Method according to any of claims 1 or 2, wherein during the energy recovery phase, at least one of said parameters is periodically controlled and a new threshold value is determined in order to periodically adjust the unwinding and winding-up speed of the apron according to this new value.

4. Method according to any of claims 2 to 3, wherein at least one parameter corresponds to measuring the state of charge of the autonomous supply means, namely the voltage at the terminals of a battery.

5. Method according to any of claims 2 to 4, wherein at least one parameter corresponds to the temperature of the electric and electronic components of said autonomous supply means.

6. Method according to any of claims 2 to 5, wherein at least one parameter corresponds to the room temperature.

7. Roller blind for implementing the method according to any of the preceding claims, comprising driving means provided with a motor connected to autonomous supply means as well as means for recovering energy corresponding to the motor torque exerted by said apron onto said driving means, wherein said recovering means comprise :
- means for measuring and storing, on the one hand, at least one parameter related to the conditions of operation of the autonomous supply means and, on the other hand, the delivered level of energy ;
- means for comparing said level of energy with a threshold value determined according to said parameter ; and
- means for adjusting the unwinding and winding-up speed of said apron.

8. Roller blind according to claim 7, wherein said measuring means comprise means for measuring the temperature of the electric and electronic components of the autonomous supply means.

9. Roller blind according to any of claims 7 or 8, wherein said measuring means comprise means for measuring the state of charge of the autonomous supply means, namely the voltage at the terminals of a battery.

10. Roller blind according to any of claims 7 to 9, wherein said measuring means comprise means for measuring the room temperature.

## Patentansprüche

1. Verfahren zur Rückgewinnung der potentiellen Schwerkraftenergie aus der Decke eines Rollladens, die Antriebsmittel umfasst, die mit einem Motor ausgestattet sind, der an Mitteln für unabhängige Stromversorgung während der Phase der Entfaltung oder des Zusammenfaltens der besagten Decke angeschlossen ist, **dadurch gekennzeichnet, dass**:
- während der Phase der Entfaltung oder des Zusammenfaltens der Decke eine Phase der Rückgewinnung der Energie bestimmt wird, die einem Drehmoment entspricht, das durch die Decke auf die besagten Antriebsmitteln ausgeübt wird.

2. Verfahren nach Anspruch 1, **dadurch gekennzeichnet, dass**:
- während dieser Phase der Rückgewinnung der Energie die Funktionsweise des Motors als Stromerzeuger gesteuert wird;
- ein Schwellenwert der rückgewinnbaren Energie in Abhängigkeit von zumindest einem Parameter bezüglich der Betriebsbedingungen der Mittel für unabhängige Stromversorgung bestimmt wird;
- der Leistungspegel der durch den als Stromerzeuger funktionierenden Motor gelieferten Energie gemessen und mit dem besagten Schwellenwert verglichen wird;
- die Geschwindigkeit der Entfaltung oder des Zusammenfaltens der Decke angepasst wird, um den Leistungspegel der gelieferten Energie kleiner als oder gleich groß wie den besagten Schwellenwert zu halten.

3. Verfahren nach Anspruch 2, **dadurch gekennzeichnet, dass** während der Phase der Rückgewinnung der Energie zumindest einer von den besagten Parametern regelmäßig kontrolliert wird und ein neuer Schwellenwert bestimmt wird, um die Geschwindigkeit der Entfaltung oder des Zusammenfaltens der Decke regelmäßig in Abhängigkeit von diesem neuen Wert anzupassen.

4. Verfahren nach einem der Ansprüche 2 bis 3, **dadurch gekennzeichnet, dass** zumindest ein Parameter der Messung des Lastzustands der Mittel für unabhängige Stromversorgung, insbesondere der Spannung an den Polen einer Batterie, entspricht.

5. Verfahren nach einem der Ansprüche 2 bis 4, **dadurch gekennzeichnet, dass** zumindest ein Parameter der Temperatur der elektrischen und elektronischen Bestandteile der besagten Mittel für unabhängige Stromversorgung entspricht.

6. Verfahren nach einem der Ansprüche 2 bis 5, **dadurch gekennzeichnet, dass** zumindest ein Parameter der Umgebungstemperatur entspricht.

7. Rollladen für die Umsetzung des Verfahrens nach einem der vorgehenden Ansprüche, umfassend Antriebsmittel, die mit einem Motor ausgestattet sind, der an Mitteln für unabhängige Stromversorgung angeschlossen ist, sowie Mittel für die Rückgewinnung der Energie, die dem Drehmoment entspricht, das durch die besagte Decke auf die besagten Antriebsmittel ausgeübt ist, **dadurch gekennzeichnet, dass** die besagten Mittel zur Rückgewinnung Folgendes umfassen:
- Mittel zum Messen und zum Speichern einerseits, von zumindest einem Parameter bezüglich der Betriebsbedingungen der Mittel für unabhängige Stromversorgung, und andererseits, von dem Leistungspegel der gelieferten Energie;
- Mittel zum Vergleichen des besagten Leistungspegels der Energie mit einem Schwellenwert, der in Abhängigkeit von dem besagten Parameter bestimmt ist; und
- Mittel zur Anpassung der Geschwindigkeit der Entfaltung oder des Zusammenfaltens der besagten Decke.

8. Rollladen nach Anspruch 7, **dadurch gekennzeichnet, dass** die besagten Messmittel Mittel zum Messen der Temperatur der elektrischen und elektronischen Bestandteile der Mittel für unabhängige Stromversorgung umfassen.

9. Rollladen nach einem der Ansprüche 7 oder 8, **dadurch gekennzeichnet, dass** die besagten Messmittel Mittel zum Messen des Lastzustands der Mittel für unabhängige Stromversorgung, insbesondere der Spannung an den Polen einer Batterie, umfassen.

10. Rollladen nach einem der Ansprüche von 7 bis 9, **dadurch gekennzeichnet, dass** die besagten Messmittel Mittel zum Messen der Umgebungstemperatur umfassen.
